# EUROPEAN PATENT APPLICATION

(11) **EP 2 582 101 A1**
(43) Date of publication of application: **17.04.2013**
(21) Application number: 11184537.6
(22) Date of filing: 10.10.2011
(51) Int. Cl.: H04L 12/58

(54) **A method, system and apparatus for geolocalized mobile messaging**

(71) Applicant: inZair SA, 1203 Geneva (CH)
(72) Inventor: Rouibah, Nourrédine, 74370 Saint-Martin-Bellevue (FR); Chion, Dominique, 01300 MARIGNIEU (FR); Deblasi, Axel, 74100 Annecy (FR)
(74) Representative: P&TS SA (AG, Ltd.)

(57) **Abstract**

Method for transmitting digital messages (1), comprising the following steps:
a sender sends an digital message addressed to a closed list of recipients;
said digital message is associated with a region (14) selectable by said sender where said digital message can be received;
a cache update request (R) for digital messages addressed to a recipient in said list is sent by a mobile equipment (4) of said recipient,
digital messages addressed to said recipient and associated with a region (14) in which said recipient is currently localized are sent to said mobile equipment (4).

## Description

### Field of the invention

The present invention is related to geolocalized digital messages.

### Description of related art

Location based services are increasingly used by wireless users of mobile equipments. In particular, location based messaging systems are known in which a digital message is automatically pushed to a wireless recipient when this recipient reaches a predefined location. For example, various services are known for pushing location based advertising to mobile users at specified locations.

US2010113066 discloses a location based system to provide messages to a recipient based on time and location based information. A message is sent to a mobile user when said mobile user has crossed a predefined geographic boundary during a predetermined time period set by the originator of the message. The message can be a SMS, MMS, SIP message, SMTP email, RSS feed, web service or ATOM based feed.

US2007176743 discloses a passenger information and paging system for sending and receiving paging messages in airports, train stations, shopping malls etc.

US2004209601 discloses a method for sending electronic car mails delivered to an automobile through a communication network such as the Internet.

WO10015480 relates to a messaging system in which the transmission depends on conditions verified in a comparison unit.

US2008032703 describes a location based notification service for sending location based alerts to mobile devices.

US2007015519 is related to the provision of location based services via a mobile communication device. Transmission depends on user profile stored in a server computer system.

US20040235454 discloses a location based service for remote triggering of mobile station location based applications.

US2006179056 discloses a method for targeting spatially associated information at persons who meet certain demographic characteristics.

US7395507 discloses a system for filtering received messages based on the user's context including user location.

Although those prior art solutions are very appreciated by senders who can target much more precisely their messages, they suffer from a number of drawbacks.

First, in those prior art solutions, messages are pushed to the recipients in the prescribed area. This is often perceived as intrusive, especially when used for sending unsolicited advertisings to all users in an area. Users in this area who don't want to receive those messages need to define some filters, or to switch off their mobile equipment.

Moreover, those solutions usually require a central server for determining the location of all users, and comparing those locations with locations indicated in all geolocalized messages. This requires extensive power processing power, since even the location of users who would prefer not to receive any such message needs to be determined and compared.

Summary of the invention

There is a need for an improved method for transmitting geolocalized digital messages.

According to an aspect, this problem is solved with a method comprising the following steps:
a sender sends an digital message addressed to a closed list of recipients;
said digital message is associated with a region selectable by said sender where said digital message can be received;
a request for digital messages addressed to a recipient in said list is sent by a mobile equipment of said recipient,
digital messages addressed to said recipient and associated with a region in which said recipient is currently localized are sent to said mobile equipment.

Therefore, geolocalized messages are only sent if a request has been sent by the mobile equipment of the intended recipient. Geolocalized messages are thus sent in pull mode, instead of being pushed. A recipient who does not want to receive any digital message won't receive most messages if he does not send any request; in this case, only instant messages will be forwarded in push mode.

According to an aspect, digital messages associated with an area larger than said region are sent to said mobile equipment in response to said request,
wherein said digital messages sent to said mobile equipment are stored in a cache memory of said mobile equipment,
wherein an digital message stored in said cache memory is signified to the recipient when the localization of his mobile equipment corresponds to the region associated with the digital message.

Therefore, a single request can be send for requesting transmission of a large set of messages associated with an area larger than the region where the recipient is currently located, including areas in which the recipient is not located but which are in the vicinity. Those messages will be signified later only if the recipient moves to such an area. Therefore, a user constantly moving, for example by car or by train, does not need to send a large number of requests to receive all the messages associated with all successively crossed regions. Offline signification and/or offline display of a message is also possible, when the recipient mobile equipment is no longer connected to a mobile network.

The messages sent by each sender are stored in a central storage of a back end server, and then sent to a mobile equipment of the recipient upon request from the mobile equipment of this recipient.

A time period can be associated with at least some of the messages. Those messages will only be transmitted to the mobile equipment of the intended recipient if a request has been sent during this time period. Alternatively, or in addition, those messages associated with a time period will only be signified to the intended recipient during this period.

Requests for geolocalized digital messages can be sent manually by the users. Requests can be prepared and sent automatically by an application in the mobile equipment of the user, for example at regular time interval. Requests can be prepared and sent automatically by an application in the mobile equipment of the user when the user's mobile equipment roams from one predefined cell to another predefined cell.

A territory, for example a country, or the whole earth, can be logically divided into a plurality of cells. In one embodiment, the cells are square or rectangular, and have a size of for example 100 meters x 100 meters.

An index can be associated with each cell. This index can change each time a message has been associated by one sender with a region overlapping at least partly this cell. The digital messages addressed to a recipient are sent to his mobile equipment only if this index has been changed since a previous transmission. The request for new messages can include an index that was associated with the current cell during the last transmission of messages associated with this cell; thus, the system only needs to compare the index indicated in the request and the current index of the cell to determine whether new messages need to be transmitted.

Some digital messages contain a plurality of contributions, each contributions containing one or a plurality of different multimedia elements. For example, one digital message can contain a first contribution from the originator, a second contribution as reply from the recipient, and a third contribution as a comment from another recipient. Different contribution can have different dates. Multimedia elements in each of the contributions can include for example text, images, voice, video, hypertext links, etc, and combinations thereof. In one aspect, when one recipient or the sender adds a new contribution to an existing digital message, this contribution is made available to all recipients of the digital message. A user can also add recipients to a new contribution, or prevent distribution of a new contribution to some recipients of the initial contribution.

Recipients can define user-definable filter for filtering the digital messages they receive. Messages will only be transmitted, and/or only be signified to those recipients if a category associated with this digital message matches the filter. For example, a recipient can introduce a filter for accepting messages related to sport, and a different filter for rejecting messages related to tobacco advertising. The filters can be stored in the user's mobile equipment, where the comparison with the messages can be made. Alternatively, or in addition, the filters can be stored in a central back end server, where this comparison with the messages can also be made.

Instant messages with the same structure than other geolocalized digital message of the invention can be defined and sent, which are marked with a flag or some properties in order to be distinguishable from other messages and immediately pushed to the mobile equipment and signified to the recipient. Those instant messages are thus treated like more conventional SMS or other instant messages, but have the same structure and/or format than the other digital messages of the invention. For example, instant messages can include one or a plurality of contributions with one or a plurality of multimedia elements in each contribution; they can preferably be received, processed and displayed with the same application in the mobile equipment than other digital messages being the subject of the invention.

Geolocalized public digital messages can be defined and sent, which do not indicate any recipient, or just a generic recipient such as "public", and which can be received and displayed by anyone in the indicated region. Those messages have the same structure and/or format than other digital messages of the invention. For example, public messages can include one or a plurality of contributions with one or a plurality of multimedia elements in each contribution; they can preferably be received, processed and displayed with the same application in the mobile equipment than other digital messages being the subject of the invention.

In one embodiment, users can display on a display of their mobile equipment a list of digital messages associated with any current region including (or close to) their current location. A user can then select one or a plurality or messages in this list, and display or play this message. The list can be represented as marks, such as balloon, on a geographic map. The list can also be displayed as reality augmented elements superimposed over a live image taken by a camera of said mobile equipment. The appearance, for example the color, and/or the shape, of those elements can be defined by the sender. For example, a merchant can send public or private messages associated with the color or logo of his shop in a region, and those messages can be displayed by potential recipients in the region.

A single account can be associated with a plurality of mobile equipment of a same recipient. Digital messages addressed to this recipient and associated with at least one region in which one of his mobile equipments is currently localized are sent to each of his mobile equipments.

### Brief Description of the Drawings

The invention will be better understood with the aid of the description of an embodiment given by way of example and illustrated by the figures, in which:
Fig. 1 schematically illustrates the structure of a digital message.
Fig. 2 schematically illustrates a region in which a user receives digital messages.
Figure 3 schematically illustrates a back end server according to the invention.
Figure 4 schematically illustrates the data flow between a backend server and a mobile equipment according to the invention.
Fig. 5 illustrates a list of digital messages superimposed as augmented reality elements over a picture or video.
Fig. 6 illustrates another list of digital messages superimposed as augmented reality elements over a picture or video.
Fig. 7 illustrates a list of digital messages superimposed as elements over a geographic map.

### Detailed Description of possible embodiments of the Invention

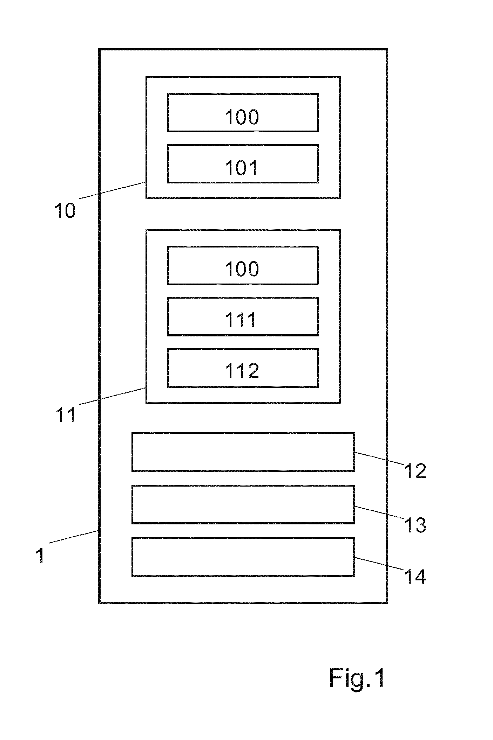

Figure 1 illustrates the structure of a digital message (or "ZMS") 1 according to the invention. The digital message 1 comprises one or a plurality of contributions of one or a plurality of participants. In the illustrated example, the digital message 1 comprises a first contribution 10 from the originator and a second contribution 11 from this originator or from a recipient. Each contribution 10, 11 can contain one or a plurality of multimedia elements 100-101 respectively 110-112. Therefore, a digital message is a collaborative message created by an individual and enriched by many other persons named the contributors. One multimedia element can include for example a text, image, video, hyperlink, etc made available by the contributors to one or a plurality of recipients of the digital message or contribution.

The digital message 1 also includes a list 14 of one or a plurality of recipients of the digital message. Each recipient is identified with his mobile phone number; messages can be sent to people present in the address book of each user. Alternatively, a recipient is identified with his e-mail address. Alternatively, a recipient is identified with his account or identity in a social network. Alternatively, a recipient is identified with an alias chosen by each user when connecting to the system for the first time. List with several recipients can be introduced, as well as identities of closed groups of recipients. A special recipient is the recipient public, used for digital messages which can be caught and read by everyone.

A digital message 1 can also include a field 12 for indicating a region in which the digital message 1 can be seen. In another embodiment, different contributions within a same messages could be associated with different regions, or region-independent. A region 14 is preferably indicated by its centre indicated as geographic coordinates, and a radius indicated for example in meters. For instance in a city, and depending on the sender's choice, the radius can be set to 50 meters. In the desert, the radius can be set to a few kilometers to make sure the recipients will catch the message even if they are a bit far from the center of the region.

A sender can for example indicate a region 14 associated with a digital message and/or with a contribution by pointing and clicking on a geographic map. List of favourites regions can also be stored and used for fast designation of commonly used regions. Alternatively, regions can also have more complex shapes, and correspond for example to geographic elements, such as a state, a locality, a street, a building etc. In one embodiment, a geolocalized message or contribution can be associated with a moving target, for example a train, a car, etc - as long as the trajectory of this target can be retrieved by the system.

Digital messages which are associated with a region 14 are called geolocalized digital messages in this text. Contributions to digital messages which are associated with a region 14 are called geolocalized contributions. It is possible to send private and public geolocalized digital messages. In one embodiment, public digital messages can be geolocalized and created only if the sender is physically present at the location of the message. Remote public digital messages are prohibited, or reserved to business customers only.

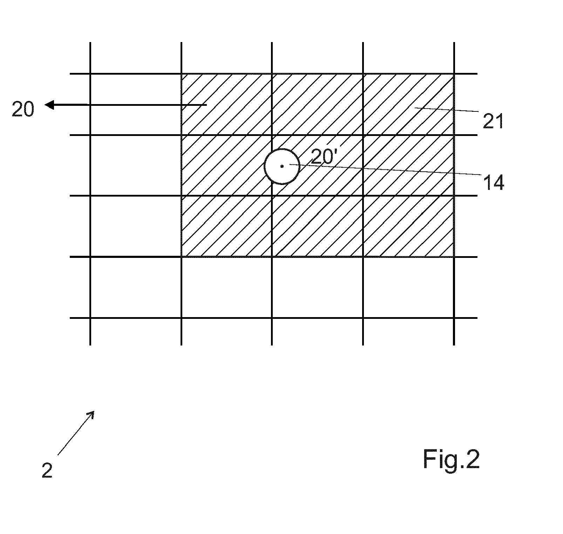

As will be described in relation with Figure 2, the territory 2 to which digital messages can be sent (for example the earth) is logically divided in a grid comprising a number of different cells 20, each cell having a unique identifier. The cells preferably cover the whole territory 2 without overlapping. A geolocalized digital message or contribution is associated with the unique identifier of the cell 20' in which the center indicated by the sender is located, as well as the identifier of those other cells 20" that intersect with the region 14 depending on the radius. The conversion between the region 14 indicated by the sender and the cells associated with the message or contribution is preferably made in a back end server, or possibly in the sender's device.

When one recipient indicated in a geolocalized message or contribution is present in one of the cells 20', 20" corresponding to the associated region 14, he will be able to retrieve the digital message or contribution, and/or receive a notification that a digital message or contribution is available for him. The recipient can then read the content of the digital message or contribution and respond to it.

A digital message 1 (or contribution) can also include a field 13 for indicating a time period during which the digital message (or contribution) will be available. A time period can be designated by a start date and an ending date, both introduced as a date field including hours, minutes and seconds. Alternatively, a time period can include a duration, for example, one hour, one week etc, starting from a date indicated in the digital message or from the sending date. A time period may also comprise a plurality of disconnected time intervals, for example periodically recurrent intervals (every day, week, month, year etc) or non periodically intervals (dependant on moon phase, sunset, etc).

A digital message including a time period is only signified to recipients during this time period. Digital messages which are associated with a time period 13 are called timed digital messages in this text. Digital contributions which are associated with a time period 13 are called timed contributions. One can combine geolocalized and timed digital messages or contributions to create more sophisticated messages or contributions. It is possible to send private and public geolocalized digital messages.

It is possible to associate different regions and/or different time periods and/or different recipients to different contributions within a single digital message.

Moreover, users can send instant digital messages which are sent immediately to a user or a group of users. This is quite similar to sending a SMS or MMS except that the digital message has the format of other digital messages in the invention, and can contain several contributions and can be received, processed and displayed with the same application in the mobile equipment of the recipient. There is no public group for instant digital messages, which are always private and for a closed list of recipients only.

Users can prepare and/or receive digital messages 1 with any suitable equipment, for example with a mobile equipment such as a cell phone, smart phone, tablet, PDA, netbook, notebook, etc, or with a fixed equipment such as a personal computer. A single user or user account can be associated with multiple devices.. For example a user may have two mobile phones, one tablet, a portable computer with 3G access and a desktop computer. All devices are synchronized simultaneously depending on their location. For example, if one of the devices associated with one user account is present in a region, digital messages associated with this region are made available to all other devices of this account.

Figure 2 illustrates a territory 2 logically divided into a plurality of cells 20, as well as a region 14 on this territory. The territory 2 preferably corresponds to the earth, or to a country or continent for example. Each point of this territory belongs to one and only one cell 20. Cell could have a square shape, or any shape suitable for covering the surface of the territory. All cells have the same surface; alternatively, cells have different surfaces, and smaller cells are for example used in the cities than on the countryside or on the ocean.

In one preferred embodiment, cells are defined based on the following specifications:
● The cells are convex quadrilaterals
● Cells are adjacent but do not necessarily share summits.
● Orthodromic surfaces of all cells do not differ more than a fixed ratio
● The ratio between the orthodromic lengths of the longest side and shorter does not exceed a fixed ratio.
● Each cell is assigned a unique identifier creating a bijection between cell and identifier. The cell identifier could be a number, a hash, or any other unique identifier.

A global map of cells can be stored in a central server, and a local map of the cells in the vicinity can be stored in the user's mobile equipment. This map is used for converting a geographic location into a cell identifier.

Each cell is associated with a global version number which is incremented each time a change happens in that cell (for example when a new digital message has been created or updated). A list of digital messages is associated to that cell and is sorted by update time.

As will be described, a mobile equipment 4 sends a request for new digital messages each time it roams from one cell to another.

A region 14 indicated by the sender of a message or contribution can overlap, entirely or in part, one or several cells. In the illustrated example, the region 14 intersects the two adjacent cells 20', 20". The message or contribution can be notified and displayed from any cell 20', 20" covered at least in part by the region 14 indicated by the sender. Therefore, when a new geolocalized digital message 3 is received, the back end server link this digital message or contribution to the identifiers of all at least partly overlapped cells from which the message can be discovered by a recipient. In the illustrated example, the identifier of the digital message will be added to both cells 20' and 20". If a mobile equipment requests a list of digital messages which can be seen from any of those cells, the back end server 3 will include this message.

The lined area 21 designates a block of cells 20 adjacent to the region 14 indicated by the sender. In this example, a cell is considered to be adjacent to the region 14 if it is directly adjacent to the cell 20' where the centre of the region 14 is located. Other definitions of adjacency can be used, for example a cell could be considered adjacent to the region 14 if it is adjacent to any cell 20', 20" at least partly covered by the region 14, or if the centre of the cell is within a predetermined distance to the centre of the region 14, etc.

As will be described, a request for update of the local cache sent by a mobile equipment triggers a synchronisation of the digital messages associated with any cell in a block 21 of cells adjacent to the user's current location. Digital messages associated with those adjacent cells are stored in the local cache and signified later if additional criteria are met.

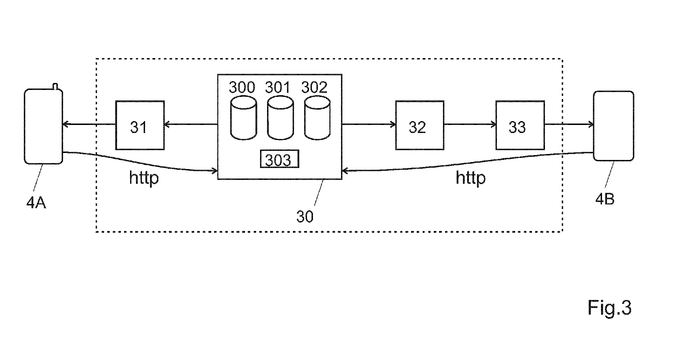

Figure 3 schematically illustrates the structure of a back end server 3 which can be used for storing and sending digital messages in the system of the invention. The back end server 3 stores and manages all the contributions in all digital messages, stores and manages the user accounts, supports the notifications mechanisms and guarantees the delivery of digital messages between users.

The back end server may be embodied as a physical server, for example a Windows or Unix Server, as a set of interconnected servers in a LAN, for example a database server and an internet server, as a virtual server, as a cloud server, or any combination thereof. The back end server 3 is thus not necessarily embodied as a single machine, but may be implemented in software running on one or any number of computers or processing systems.

In the illustrated example, the back end server 3 comprises one central server or module 30, such as a cloud server, for storing a database 300 with user accounts, a second database 301 with digital messages, and a third database 302 with geographic definition of cells. A software engine 303 executed in the central server 30 manages the user accounts, receives and processes digital messages, forward instant digital messages, receives and processes requests for geolocalized messages received from recipients, and forwards geolocalized messages in response to those requests and taking into account rules and criteria. Requests for digital messages can be received from mobile equipments 4 through any suitable channel, for example as http requests received by a suitable http engine. The central server 30 sends digital messages to Android mobile equipments 4A over a suitable Android gateway 31 which converts digital messages from the format used in the central server 30 into a format suitable for reception and display by Android mobile equipments. Digital messages sent to iOS mobile equipments 4B are transferred over a suitable iOS gateway 32 and/or over an Apple server 33 which together convert digital messages from the format used in the central server 30 into a format suitable for reception and display by iOS mobile equipments. Other gateways may be used for conversion to other formats, including conversion to MMS, HTML etc.

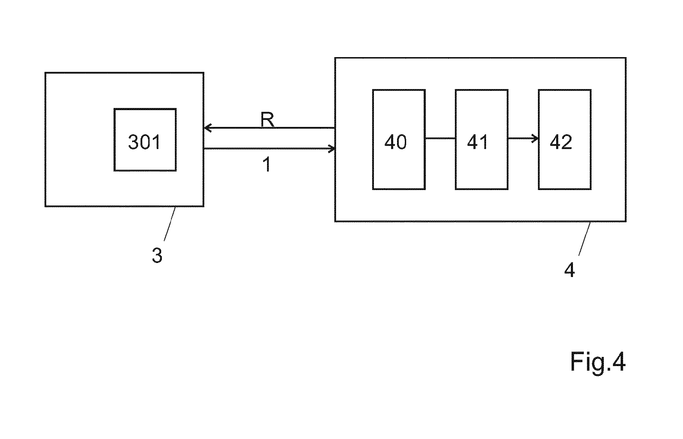

Figure 4 schematically illustrates a dataflow between the backend server 3 and a user mobile equipment 4. As mentioned, geolocalized digital messages are transmitted in "pull mode" from the back end server 3 to the mobile equipment 4; i.e., the mobile equipment needs to send a cache update request R to the back end server 3, in order to retrieve geolocalized digital messages 1 stored in the central database 301 of the back end server 3.

A new request for cache update is automatically sent by the mobile equipment 4 each time a moving user roams from one cell to the next; the mobile equipment 4 will detects that it is entering a new cell, and sends a request to update the list of digital messages this particular user can receive in that cell. The version number of his local cache is compared with the version number of the current cell in the back end server, and the digital messages will be synchronized if necessary.

Cache update requests R can also be sent on demand by a recipient, or each time he starts his mobile equipment or an application for displaying digital messages 1 on this mobile equipment. Cache update requests R are preferably also automatically sent by the mobile equipment at periodical intervals, for example four times an hour, to make sure that new digital messages are pulled with little delay. Other events may also be defined to trigger a cache update request.

The engine 303 receives and analyses the cache update request R of the recipient and verifies the cell in which the mobile equipment 4 is located. The cell identifier can be transmitted as part of the cache update request, or determined from a location provided by the infrastructure of a cellular network. The engine 303 then determines based on version numbers if there are digital messages for the recipient associated with any cell of an area 21 adjacent to the cell in which the recipient is located and which have not yet been transmitted to the recipient. For example, the engine can compare the version numbers of all cells in the area 21 stored in the mobile equipment and in database 301.

The engine 303 can verify other criteria before deciding to send a digital message to a recipient; for example, the engine 303 can verify if the digital message is associated with a time period and if the current time is within the time period, or is close to this time period. The engine 303 can also verify if a category associated with a digital message 1 matches a user profile or preferences set by the recipient and stored in database 300.

Instant messages, as well as messages originating from the cell in which the recipient is currently located, are immediately transmitted by the back end server to the recipient, in push mode and without waiting for a cache update request R. This avoids any delay in transmission of instant messages or messages sent between close partners.

The recipient's mobile equipment 4 receives the updated list of digital messages sent by the back end server 3 in reply to the cache update request R, and stores those messages in a local cache 40. Several caches may be provided, one for public messages and another one for private messages. Additional caches may also be provided for other purposes, such as commercial messages etc.

A notification engine 41 in the recipient's mobile equipment constantly or periodically monitors some criteria, for example the recipient's location, the current time etc, and digital messages in the local cache 40 to decide whether digital messages should be signified to the recipient with a message or signal on the display 42. An indicator on the application logo on the display of the mobile equipment can indicate that incoming digital messages in the local cache are accessible but have not yet been read. Audible significations and pop up windows can also be used.

Instant messages received by a mobile equipment trigger an immediate notification to the recipient. Geolocalized digital messages (or contributions) having an association with the cell in which the recipient is currently located are also immediately signified. Public messages don't trigger an immediate notification because we can afford to miss a public message and because a recipient can search for public messages in a list, on a map or with an augmented reality application for example.

Messages respectively contributions associated with an area 21 adjacent to the cell of the recipient, but in which the recipient is not yet located, are stored in the local cache 40 but not immediately displayed; they are only signified to the recipient when trigger conditions are met. This process is called offline notification. Digital messages preloaded in the local cache 40 are tolerant to network or data connection loss and can even be signified and/or displayed when the recipient is offline, as long as location information is provided. The next time the connection is established again, the system will update its local cache. In one embodiment, when the connection is established again, the mobile equipment sends its trajectory during the offline period to the back end server 3, which replies with a list of all or some missed digital messages.

Conditions which can trigger notification of a digital message present in the local cache include for example:
● Displacement to another cell
● Displacement within one cell -the mobile equipment can for example decide to notify a digital message only when the recipient is exactly within the radius of the region 14.
● Current time
● User profile or preferences

The local cache 40 manages a limited number, for example 50, of the most recent digital messages 1 which have been read. The number of messages can depend on the memory capacity of the mobile equipment, or be defined by the user. Older messages are downloaded from the back end server 3 from the mobile equipment on user demand. Private geolocalized or timed messages which have not yet been notified or read are managed separately from this list.

The back end server 3 also includes a list of the latest private digital messages (for example the 50 latest digital messages) addressed to each recipient. A central version number is associated to this list. The version number is incremented each time the list is changed, for example when a new contribution is added to a digital message, when a new instant digital message is added, or when a new digital message is addressed to the recipient. Technical changes such as when someone reads a message imply a change to the version number but do not make the message more recent in the list.

When a user reads a digital message, complete it, modify it or sends a new digital message, its local cache 40 in his mobile equipment 4 is updated and a local version number associated with the list of digital messages in the local cache is incremented. This local version number is compared with the central version number stored in the back end server; if the numbers are different, the list of digital messages in the local cache 40 and in the back end server is synchronized.

The synchronization process is preferably based on contributions. For each digital message, the back end server 3 maintains a sorted list of contributions. When cache synchronization is requested, the application in the mobile equipment provides an id or a hash of the last contributions it has locally in the cache. The server can then determine if an update of each contribution is needed.

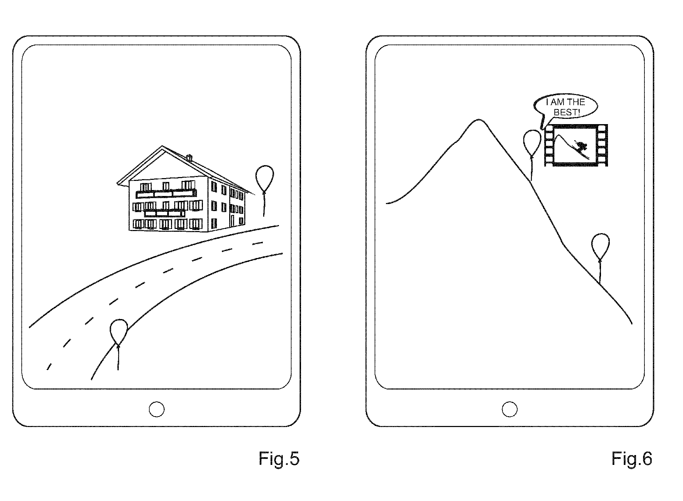

Figure 5 illustrates a mobile equipment 4 of a recipient in which a fixed or video view of the surroundings captured with a camera of the mobile equipment is displayed on the display 42. In this example, the live image corresponds to a street with a house. A representation 16 of digital messages 1 associated with a location visible on said view are superimposed as augmented reality element over this view. In this example, digital messages are represented with a balloon displayed at the center of the location associated with the message. Attributes of the balloons, such as their color, shape or a logo, can be used for distinguishing between public and private digital messages without opening the message. In one embodiment, the sender can also customize the color, shape or appearance of the representation of a digital message; for example, a hamburger restaurant might want to post customized public messages with advertising for the restaurant, where the color of the balloon corresponds to the trade color of the restaurant.

A user who wants to catch digital messages can thus launch a suitable application on his mobile equipment 4, and take pictures of video of the surroundings with the integrated camera. He can then watch the balloons or other representations superimposed over this view, and open the corresponding digital messages with a click on the selected balloon to read or complete the message. In a preferred embodiment, only balloon which can be retrieved from a recipient at his particular location at that time are displayed on the view; digital messages associated with more remote regions are not displayed, even if those remote regions are visible on the view.

Figure 6 illustrates another view with superimposed balloons. In this example, the view corresponds to a ski slope where some previous users have left public digital or private digital messages for anyone or their friends, respectively. Some multimedia elements of a digital message might be displayed next or on some balloons or other representations. In the example, one user has left a message with a text "I am the best" and with a video of his exploits on ski.

The superimposition of the balloons 16 on a view is preferably computed locally in the user's display, using the digital messages stored in the local cache 40.

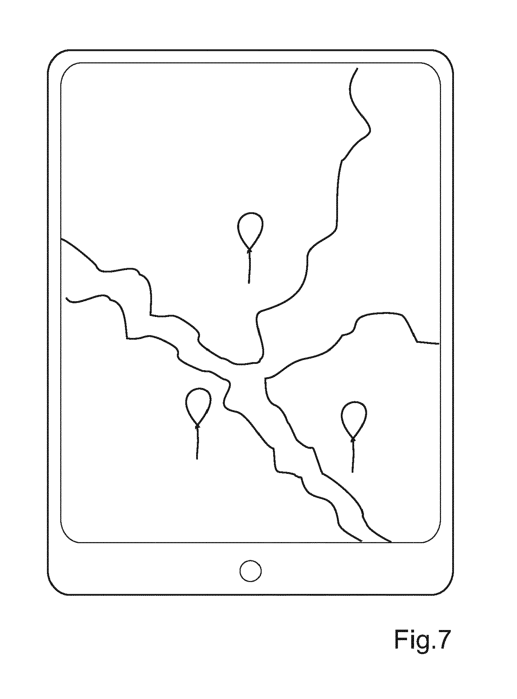

Figure 7 illustrates a geographic map displayed on a recipient's mobile equipment 4, with superimposed representations 16 of digital messages addressed to this recipient or to the public. The recipient can open the corresponding digital messages with a click on the selected balloon. In one embodiment, the recipient can only open balloon associated with a region in which one of his equipment is currently located. In another embodiment, the recipient can open digital messages associated with more remote regions. In one embodiment, only digital messages present in the local cache 40 are displayed. In another embodiment, the recipient can request display of additional digital messages available in the back end server 30.

Digital messages can also be displayed as a list, for example a chronological list, or a list sorted by distance to the recipient's current location.

### Reference numbers

- 1: digital message
- 10, 11: contributions
- 100-101 ;110-112: multimedia elements
- 12: region
- 13: time period
- 14: recipient
- 16: representation of a digital message
- 2: territory
- 20: cells
- 21: area
- 3: backend server
- 30: cloud server
- 300: database with user accounts
- 301: database with digital messages
- 302: database with geographic definition of cells
- 31: Android gateway
- 32: iOS gateway
- 33: Apple server
- 4A, 4B: mobile equipment
- 40: local cache
- 41: notification engine
- 42: display

## Claims

1. A method for transmitting digital messages (1), comprising the following steps:
a sender sends an digital message addressed to a closed list of recipients;
said digital message is associated with a region (14) selectable by said sender where said digital message can be received;
a cache update request (R) for digital messages addressed to a recipient in said list is sent by a mobile equipment (4) of said recipient,
digital messages addressed to said recipient and associated with a region (14) in which said recipient is currently localized are sent to said mobile equipment (4).

2. The method of claim 1, wherein digital messages (1) associated with an area (21) larger than said region (14) are sent to said mobile equipment in response to said cache update request (R),
wherein said digital messages sent to said mobile equipment are stored in a cache memory (40) of said mobile equipment (4),
wherein an digital message stored in said cache memory is signified to said recipient when the localization of said mobile equipment (4) corresponds to the region (14) associated with said digital message.

3. The method of one of the claims 1 or 2, wherein said digital message (1) sent from said sender is stored in a central storage (301) of a back end server (3), then sent to a cache memory (40) of said mobile equipment (4) only when said cache update request (R) has been received.

4. The method of one of the claims 1 to 3, wherein said mobile equipment automatically sends a new cache update request (R) when said mobile equipment roams from one predefined cell (20) to another predefined cell.

5. The method of one of the claims 1 to 4, wherein said mobile equipment automatically sends a new cache update request (R) at predetermined intervals.

6. The method of one of the claims 1 to 5, further comprising the steps of:
logically dividing a geographic territory (2) into a plurality of cells (20);
associating an identifier with each of said cell, and updating said index each time a digital message (2) has been associated by one sender with a region (14) intersecting said cell;
forwarding said digital message (1) addressed to said recipient to said mobile equipment only if said identifier has been updated since a previous transmission.

7. The method of one of the claims 1 to 6, wherein at least one of said digital messages (1) contains a plurality of contributions (10, 11),
each contributions containing one or a plurality of different multimedia elements (100-101; 110-112).

8. The method of claim 7, wherein different contributions to a single message are associated with different regions (14).

9. The method of one of the claims 1 to 8, further comprising a step where said recipient defines user-definable filter for filtering said digital messages, and transmitting said digital messages to the recipient's mobile equipment (4) only if a category associated with said digital message matches said filter.

10. The method of one of the claims 1 to 9, further comprising a step of defining public geolocalized digital messages having the same structure than other said digital messages, but which do not indicate any recipient and which can be pulled by any recipient in a region associated with said public geolocalized digital messages.

11. The method of one of the claims 1 to 10, further comprising steps of:
displaying on a display (42) of said mobile equipment a list (16) of digital messages (1) associated with a region comprising the location of said recipient and which can be seen by said recipient;
user-selecting one of said messages in said list;
displaying said digital message.

12. The method of claim 11, wherein said digital messages in said list are displayed a reality augmented elements (16) superimposed over a view taken by a camera of said mobile equipment.

13. The method of claim 12, further comprising a step where said sender defines the appearance of said elements.

14. The method of one of the claims 1 to 13, wherein a single account is associated with a plurality of mobile equipment of a same user,
and wherein digital messages addressed to said recipient and associated with at least one region in which one of said mobile equipment is currently localized are sent to each of said mobile equipment.

15. A method for receiving digital messages, comprising the following steps:
installing in a mobile equipment (4) of a recipient a mobile application for receiving digital messages;
using said mobile application for sending a cache update request for retrieving digital messages (1) addressed to said recipient, said request containing the current location of said mobile equipment;
retrieving and storing in a memory cache (40) of said mobile equipment a list digital messages addressed to said recipient, said list containing electronic messages associated with an area (21) around said current location;
signifying to said recipient a digital message from said list only when the localization of said mobile equipment (4) corresponds to a region (14; 20', 20") associated with said digital message.

16. The method of claim 15, wherein at least one of said digital message in said list is associated with a time period, and wherein said digital message is only signified to said recipient if the localization of said mobile equipment corresponds to said region associated with said digital message during said time period.

17. The method of one of the claims 15 to 16, wherein said mobile application automatically sends a new request for digital messages when said mobile equipment roams from one predefined cell (20) to another predefined cell.

18. The method of one of the claims 15 to 17, wherein said message stored in said memory cache is signified and/or displayed to said user even if said mobile equipment is disconnected from any mobile network.

19. The method of one of the claims 15 to 18, further comprising a step where said recipient defines user-definable filter for filtering said digital messages, and transmitting said digital messages only if a category associated with said digital message matches said filter.

20. The method of one of the claims 15 to 19, further comprising steps of:
capturing a view of the surroundings with a camera of said mobile equipment;
superimposing on said view representations (16) of digital messages (1) at the location indicated in said digital messages;
user-selecting one of said representations;
displaying the digital message associated with said representation.

21. A method for transmitting digital messages, comprising the following steps:
receiving in a back end server (3) digital messages (1) addressed to a closed list of recipients, wherein at least some of said digital messages are associated with a region (14) where said digital message can be received;
storing said digital messages in a central storage (301),
receiving from a recipient a cache update request (R) for requesting digital messages addressed to said recipient, wherein said request includes the current location of said recipient;
retrieving from said central storage (301) digital messages associated with an area (21) including said current location;
sending the retrieved digital messages to said recipient.

22. A computer program carrier comprising software instructions for causing a processor carry out the method of one of the claims 1 to 21 when said processor executes said software instructions.
